(19) **Europäisches Patentamt / European Patent Office / Office européen des brevets**

(11) **EP 4 141 757 A1**

(12) **EUROPEAN PATENT APPLICATION**
published in accordance with Art. 153(4) EPC

(43) Date of publication:
**01.03.2023 Bulletin 2023/09**

(21) Application number: **21792882.9**

(22) Date of filing: **10.03.2021**

(51) International Patent Classification (IPC):
**G06Q 10/04** (2012.01)     **G21C 23/00** (2006.01)

(52) Cooperative Patent Classification (CPC):
**G06Q 10/04; G21C 23/00;** Y02E 30/30

(86) International application number:
**PCT/KR2021/002991**

(87) International publication number:
**WO 2021/215657 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2020 KR 20200048942**

(71) Applicant: **Korea Hydro & Nuclear Power Co., Ltd 38120 Gyeongsangbuk-do (KR)**

(72) Inventors:
- **YOON, Changyeon**
  **Daejeon 34101 (KR)**
- **KIM, Gilim**
  **Daejeon 34101 (KR)**
- **KIM, Minchul**
  **Daejeon 34101 (KR)**
- **KIM, Cheon-Woo**
  **Daejeon 34101 (KR)**

(74) Representative: **Berggren Oy**
**P.O. Box 16**
**Eteläinen Rautatiekatu 10A**
**00101 Helsinki (FI)**

(54) **EXPOSURE DOSE MEASUREMENT SIMULATION APPARATUS AND METHOD**

(57) An exposure dose measurement simulation device according to an embodiment of the present invention includes: a virtual work area generating portion that generates a virtual work area corresponding to a work area of a radiation facility; and an exposure dose prediction portion that predicts an exposure dose of a worker positioned in the virtual work area, wherein the exposure dose prediction portion includes a database portion that includes first data on a spatial dose rate of the radiation facility and second data on a position of a radiation source in the radiation facility, and a first exposure dose calculation portion that calculates the exposure dose of the worker positioned in the virtual work area using the first data and second data.

FIG. 1

**Description**

**[Technical Field]**

The present invention relates to an exposure dose measurement simulation device and a method thereof. More particularly, the present invention relates to an exposure dose measurement simulation device of a nuclear power plant, and a method thereof.

**[Background Art]**

In general, dismantling work of a nuclear power plant requires safety of the dismantling worker to be secured. Accordingly, devices and methods for predicting an exposure dose of dismantling workers are being developed.

However, a conventional exposure dose prediction device and a method for predicting an exposure dose by multiplying a space dose rate in a work area by working hours and the number of workers is used. Therefore, the precision and reliability of the predicted exposure dose are not high.

In addition, when using an exposure dose measurement simulation device and method such as Monte Carlo N-particle transport (MCNP) or VISIPLAN that can calculate an exposure dose of a dismantling worker to predict an exposure dose of a worker performing dismantling, the calculation speed is very slow, a method used is complex, and complex modifications must be made to reflect the change of a working environment when dismantling is carried out.

**[Disclosure]**

[Technical Problem]

The present embodiment relates to an exposure dose measurement simulation device and method that can quickly and accurately predict the exposure dose of workers without information on the dose rate of radiation sources.

[Technical Solution]

An exposure dose measurement simulation device according to an embodiment of the present invention includes: a virtual work area generating portion that generates a virtual work area corresponding to a work area of a radiation facility; and an exposure dose prediction portion that predicts an exposure dose of a worker positioned in the virtual work area, wherein the exposure dose prediction portion includes a database portion that includes first data on a spatial dose rate of the radiation facility and second data on a position of a radiation source in the radiation facility, and a first exposure dose calculation portion that calculates the exposure dose of the worker positioned in the virtual work area using the first data and second data.

The database portion may include third data on radiation emitted from a reactor vessel internal structure of the radiation facility and fourth data on an area exposure dose of the radiation facility, and the exposure dose prediction portion may further include a second exposure dose calculation portion that calculates the exposure dose of the worker by applying a working flow and working hours to the third data and the fourth data.

The area exposure dose may be an exposure dose to a lattice area where the working area is divided into a plurality of lattices.

The virtual work area generating portion may include a three-dimensional building information modeling device, and the 3D building information modeling device may modify or replace the virtual work area.

In addition, an exposure dose measurement simulation method according to an embodiment of the present invention includes: generating a virtual work area corresponding to a work area of a radiation facility by using a virtual work area generating portion; and predicting the exposure dose of the worker positioned in the virtual work area using an exposure dose prediction portion, wherein the predicting of the exposure dose of the worker includes calculating the exposure dose of the worker by applying first data on a spatial dose rate of the radiation facility and second data on a position of a radiation source of the radiation facility to the first exposure dose calculation portion of the exposure dose prediction portion.

The predicting of the exposure dose of the worker may further include, when the worker works in a place adjacent to structures inside the reactor of the radiation facility, calculating the exposure dose of the worker by applying third data on radiation emitted from the internal structure of the reactor of the radiation facility, fourth data on an area exposure dose of the radiation facility, and a working flow and working hours of the worker to the second exposure dose calculation portion connected to the database portion.

The area exposure dose may be an exposure dose to a lattice area where the radiation facility is divided into a plurality of lattices.

The virtual work area generating portion may include a three-dimensional building information modeling device, and the virtual work area may be modified or replaced using the 3D building information modeling device.

[Advantageous Effects]

According to the embodiments of the present invention, in the nuclear power plant, the exposure dose of workers can be predicted quickly, accurately, and safely by applying the first data on the spatial dose rate measured at any point adjacent to the radiation source, the second data on the position of the radiation source, the worker's working flow and working hour even without information on the dose rate at the position of the radiation source.

In addition, when a worker proceeds with dismantling in the work area where the radiation reactor vessel internal structure is positioned, the exposure dose of workers can be predicted quickly and accurately applying the worker's working flow and working hour to the third data on radiation emitted from the reactor vessel internal structure included in the database portion and the fourth data on the area exposure dose.

In addition, the exposure dose measurement simulation device and method according to the embodiments of the present invention generate a virtual work area corresponding to the work area and displays the virtual work area on the display portion to calculate the worker's exposure dose, thereby accurately and conveniently reflecting the change in the work area.

[Description of the Drawings]

FIG. 1 is a schematic view of an exposure dose measurement simulation device according to an embodiment of the present invention.

FIG. 2 shows a virtual work area generated by a virtual work area generator of the exposure dose measurement simulation device according to the embodiment of the present invention.

FIG. 3 shows a lattice area formed in a virtual work area generating portion of the exposure dose measurement simulation device according to the embodiment of the present invention.

FIG. 4 is a flowchart sequentially showing a simulation method for measuring an exposure dose according to an embodiment of the present invention.

[Mode for Invention]

Hereinafter, with reference to the accompanying drawing, various embodiments of the present invention will be described in detail such that a person of an ordinary skill can easily perform it in the technical field to which the present invention belongs. The present invention may be implemented in several different forms and is not limited to the embodiments described herein.

In order to clearly explain the present invention, parts irrelevant to the description are omitted, and the same reference sign is attached to the same or similar constituent elements throughout the specification.

In addition, since the size and thickness of each component shown in the drawing are arbitrarily indicated for convenience of explanation, the present invention is not necessarily limited to the drawings.

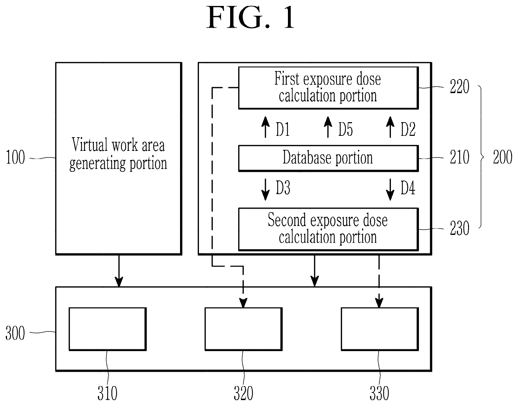

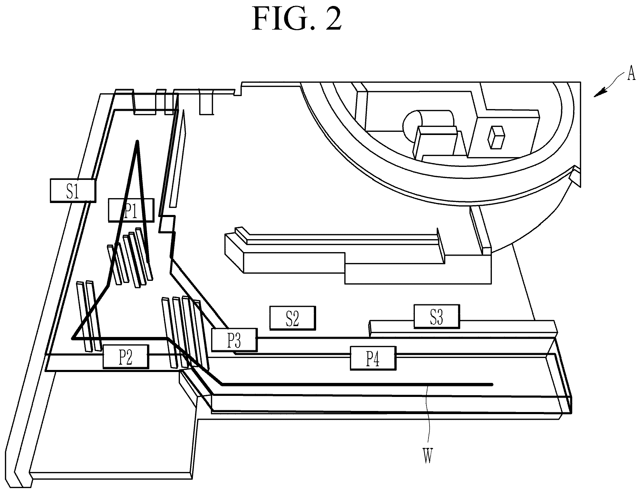

FIG. 1 is a schematic view of an exposure dose measurement simulation device according to an embodiment, and FIG. 2 shows a virtual work area generated by a virtual work area generator of the exposure dose measurement simulation device according to the embodiment of the present invention.

As shown in FIG. 1, an exposure dose measurement simulation device according to an embodiment of the present invention includes a virtual work area generating portion 100, an exposure dose prediction portion 200, and a display portion 300.

As shown in FIG. 1 and FIG. 2, the virtual work area generating portion 100 may generate a virtual work area A corresponding to a work area inside a radiation facility, for example, a nuclear power plant, and displays the virtual work area A on the display portion 300.

The virtual work area generating portion 100 may include a three-dimensional building information modeling (BIM) device.

The virtual work area generating portion 100 can be more easily modified or replaced with the virtual work area A displayed on the display portion 300. That is, in the case of dismantling work, the work area changes in various ways due to various dismantling works such as pipe cutting, wall perforation, and movement of equipment, and it is possible to quickly and accurately predict the exposure dose of workers by modifying the virtual work area A in consideration of such a change. In addition, when the dismantling work is carried out in a new work area inside a nuclear power plant, the work area is quickly replacing a virtual work area A corresponding to the dismantling work, thereby quickly and accurately predicting the worker's exposure dose.

In addition, since all work spaces inside the nuclear power plant are implemented in three dimensions, it is possible to minimize human errors by improving the visibility and convenience of users.

In the present embodiment, the case of predicting the exposure dose of workers performing the dismantling work of the nuclear power plant is described, but the embodiment is not limited thereto, and it is also applicable to the case of predicting an exposure dose of workers of a nuclear power plant or radiation-using facility in operation.

An exposure dose prediction portion 200 can predict the exposure dose of workers positioned in the virtual work area A.

The exposure dose prediction portion 200 may include a database portion 210, a first exposure dose calculation portion 220, and a second exposure dose calculation portion 230.

The database portion 210 may include first data D1 for a spatial dose rate measured at any point adjacent to a radiation source, second data D2 for a position of a radiation source in the virtual work area A, third data D3 on radiation emitted from a reactor vessel internal (RVI) structure in all working areas of the nuclear power plant, fourth data D4 for area exposure doses in all working areas of the nuclear power plant, and fifth data D5 for shields in the virtual work area A.

The first data D1 may be data on the space dose rate measured at any point adjacent to the radiation source during operation of the nuclear power plant, or data on the space dose rate measured at any point adjacent to the radiation source after entering the nuclear power plant during dismantling work. Since the first data D1 reflects radioactive decay by nuclides, the data measured once may be used continuously.

The second data D2 may be data on the position of a radiation source emitting radiation located in the virtual work area A corresponding to the working area of the nuclear power plant.

The third data D3 may be data on radiation emitted from the reactor vessel internal structure, which is heavily irradiated.

The fourth data D4 is data on the area exposure dose of all working areas of the nuclear power plant, and an area exposure dose Q1 may be a detailed exposure dose for a lattice area R in which all the work areas are divided into a plurality of lattices.

The database portion 210 may store the first data D1, the second data D2, the third data D3, the fourth data D4, and the fifth data D5 for the working area of the nuclear power plant. The database portion 210 is connected to a first exposure dose calculation portion 220 and a second exposure dose calculation portion 230, and thus the exposure dose of workers can be calculated by supplying some of the first data D1, the second data D2, the third data D3, the fourth data D4, and the fifth data D5 according to a dismantling target.

The first exposure dose calculation portion 220 may calculate the exposure dose of the worker when the worker performs dismantling in a work area in which a dismantling target other than the reactor internal structure, for example, an auxiliary building (AB), an emergency diesel generator (EDGB), and the like, is located. The first exposure dose calculation portion 220 may calculate the exposure dose of the worker by using the first data D1 for the spatial dose rate measured at any point adjacent to the radiation source, and the second data D2 for the position of the radiation source in the virtual work area A.

Hereinafter, a method of calculating an exposure dose of a worker using the first data and the second data will be described in detail with reference to FIG. 2.

As shown in FIG. 2, the virtual work area A may be displayed on the virtual display portion 310 of the display portion 300.

First, referring to the virtual work area A, information on spatial dose rates of arbitrary positions P1, P2, P3, and P4 of the nuclear power plant and distances between positions S1, S2, and S3 of the radiation source and the arbitrary positions P1, P2, P3, and P4 is extracted from the first data D1 and the second data D2, and the dose rate of the radiation source is calculated by applying the extracted information to a distance inverse square law and a radiation attenuation formula.

Next, the information on the radiation dose rate of the radiation source, the distance between the positions S1, S2, and S3 of the radiation source and the position of the worker is applied to the distance inverse square law and the attenuation formula of radiation, and a working flow W and working hours h of the worker are input to calculate a dose of the worker, that is, the exposure dose of the worker positioned in the work area.

Therefore, even without radiation information of the radiation source, it is possible to quickly and accurately calculate the worker's exposure dose by using the data D1 and D2 on the spatial dose rate and the position of the radiation source.

In this case, the exposure dose of the worker can be calculated more accurately by reflecting the fifth data D5 for the shield.

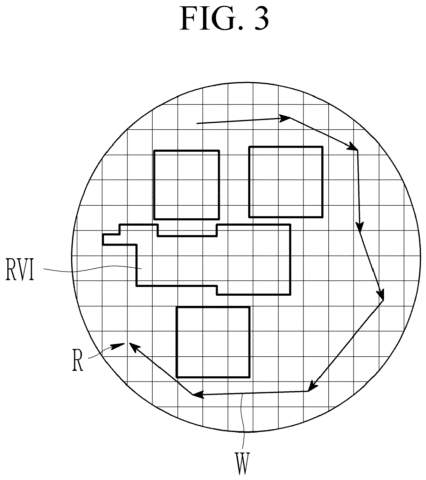

FIG. 3 shows the lattice area R formed in the virtual work area generating portion 100 of the exposure dose measurement simulation device according to the embodiment of the present invention.

As shown in FIG. 3, the second exposure dose calculation portion 230 may calculate the exposure dose of the worker when the worker is dismantling in a work area where the radioactive reactor vessel internal structure is positioned.

The second exposure dose calculation portion 230 may calculate the exposure dose of the worker by applying the working flow W and working hour of the worker to the third data D3 and the fourth data D4 of the database portion 210.

That is, the second exposure dose calculation portion 230 may calculate the exposure dose of the worker by multiplying the exposure dose in the lattice area R corresponding to the working flow W of the worker by the working hour by using the third data D3 for the radiation emitted from the reactor vessel internal structure supplied from the database portion 210 and the fourth data D4 for the area exposure dose, and then adding them together. The exposure dose of the worker can be expressed as Equation 1 below.

[Equation 1]

$$\text{Exposure dose of worker } (\mu Sv) = \text{Space dose rate } (\mu Sv/h) \text{ corresponding}$$

$$\text{to working flow W of worker} \times \text{working hours (h)}$$

The display portion 300 includes a virtual work area display portion 310, a first exposure dose calculation interface portion 320 that calculates the exposure dose of the worker during general dismantling, and a second exposure dose calculation interface portion 330 that calculates the exposure dose of the worker when the reactor vessel internal structure is dismantled.

The virtual work area display portion 310 may be connected to the virtual work area generating portion 100, and the virtual work area A may be displayed on the virtual work area display portion 310.

The first exposure dose calculation interface 320 is connected to the first exposure dose calculation portion 220, and when the worker performs dismantling work in the work area where the dismantling target other than the reactor vessel internal structure is located, the first data D1, the second data D2, the working flow W, and work hours of the worker to the first exposure dose calculation portion 220 using the first exposure dose calculation interface unit 320 such that the exposure dose of the worker can be calculated. In this case, as shown in FIG. 2, since a working flow W of the worker, any position where the spatial dose rate is measured, and a position of the radiation source are displayed on the display portion of the virtual work area, the exposure dose of the worker can be easily calculated.

The second exposure dose calculation interface 330 is connected to the second exposure dose calculation portion 230, and when the worker performs dismantling work in the work area where the reactor vessel internal structure, which is a dismantling target, to be dismantled is located, the third data D3, the fourth data D4, and the working flow W and the work hours of the worker are input to the second exposure dose calculation portion 230 using the second exposure dose calculation interface unit 330 such that the exposure dose of the worker can be accurately calculated. In this case, as shown in FIG. 3, since the working flow W of the work can be grasped in real time, the worker's exposure dose can be calculated more accurately by reflecting the working flow W according to the type of work.

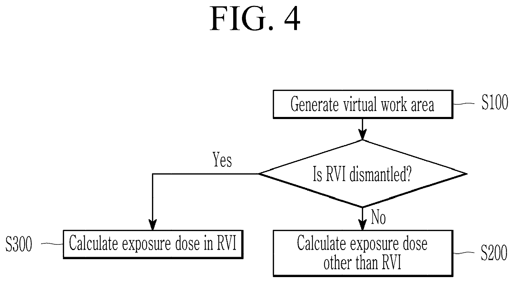

An exposure dose measurement simulation method using the exposure dose measurement simulation device according to the embodiment of the present invention will be described in detail with reference to FIG. 4.

FIG. 4 is a flowchart sequentially showing a simulation method for measuring an exposure dose according to an embodiment of the present invention.

As shown in FIG. 4, according to an embodiment of the present invention, a simulation method for measuring an exposure dose includes generating a virtual work area A corresponding to a work area of a radiation facility by using a virtual work area generating portion 100 (S100).

Next, when the worker performs a dismantling work in the work area where a dismantling target is located other than a reactor vessel internal structure of the radiation facility, the exposure dose of the worker is calculated by applying first data D1 for a spatial dose rate of the radiation facility, second data D2 for a position of a radiation source of the radiation facility, and working flow W and working hours of the worker to the first exposure dose calculation portion 220 of the exposure dose prediction portion 200 (S200).

Next, when the worker performs the dismantling work in the work area where the reactor vessel internal structure to be dismantled is located, the exposure dose of the worker is calculated by applying third data D3 for radiation emitted from the reactor vessel internal structure of the radiation facility, fourth data D4 for the area exposure dose of the radiation facility, and the working flow W and working hours of the worker to the second exposure dose calculation portion 230 connected to the database portion 210 (S300).

In this case, the database portion 210 stores the first data D1, the second data D2, the third data D3, the fourth data D4, and the fifth data D5 for the working area of the nuclear power plant and is connected to the first exposure dose calculation portion 220 and the second exposure dose calculation portion 230, and according to a dismantling target such that the exposure dose of workers can be calculated by supplying some of the first data D1, the second data D2, the third data D3, the fourth data D4, and the fifth data D5 to the first exposure dose calculation portion 220 and the second exposure dose calculation portion 230.

Although the present disclosure has been described through a preferred embodiment as described above, those skilled in the art to which the present invention pertains will readily understand that the present invention is not limited thereto and that various modifications and variations are possible without departing from the scope of the claims set forth below.

**Claims**

1. An exposure dose measurement simulation device comprising:

   a virtual work area generating portion that generates a virtual work area corresponding to a work area of a radiation facility; and
   an exposure dose prediction portion that predicts an exposure dose of a worker positioned in the virtual work area, wherein the exposure dose prediction portion comprises
   a database portion that includes first data on a spatial dose rate of the radiation facility and second data on a position of a radiation source in the radiation facility, and
   a first exposure dose calculation portion that calculates the exposure dose of the worker positioned in the virtual work area using the first data and second data.

2. The exposure dose measurement simulation device of claim 1, wherein

   the database portion includes third data on radiation emitted from a reactor vessel internal structure of the radiation facility and fourth data on an area exposure dose of the radiation facility, and
   the exposure dose prediction portion further comprises
   a second exposure dose calculation portion that calculates the exposure dose of the worker by applying a working flow and working hours to the third data and the fourth data.

3. The exposure dose measurement simulation device of claim 2, wherein
   the area exposure dose is an exposure dose to a lattice area where the working area is divided into a plurality of lattices.

4. The exposure dose measurement simulation device of claim 1, wherein

   the virtual work area generating portion includes a three-dimensional building information modeling device, and
   the 3D building information modeling device modifies or replaces the virtual work area.

5. An exposure dose measurement simulation method comprising:

   generating a virtual work area corresponding to a work area of a radiation facility by using a virtual work area generating portion; and
   predicting the exposure dose of the worker positioned in the virtual work area using an exposure dose prediction portion,
   wherein the predicting of the exposure dose of the worker comprises calculating the exposure dose of the worker by applying first data on a spatial dose rate of the radiation facility and second data on a position of a radiation source of the radiation facility to the first exposure dose calculation portion of the exposure dose prediction portion.

6. The exposure dose measurement simulation method of claim 5, wherein

   the predicting of the exposure dose of the worker further comprises,
   when the worker works in a place adjacent to structures inside the reactor of the radiation facility, calculating the exposure dose of the worker by applying third data on radiation emitted from the internal structure of the reactor of the radiation facility, fourth data on an area exposure dose of the radiation facility, and a working flow and working hours of the worker to the second exposure dose calculation portion connected to the database portion.

7. The exposure dose measurement simulation method of claim 6, wherein
   the area exposure dose is an exposure dose to a lattice area where the radiation facility is divided into a plurality of lattices.

8. The exposure dose measurement simulation method of claim 5, wherein

the virtual work area generating portion includes a three-dimensional building information modeling device, and the virtual work area is modified or replaced using the 3D building information modeling device.

# FIG. 1

FIG. 2

# FIG. 3

# FIG. 4

Generate virtual work area —— S100

Is RVI dismantled?

Yes

No

S300 —— Calculate exposure dose in RVI

Calculate exposure dose other than RVI —— S200

# EP 4 141 757 A1

## INTERNATIONAL SEARCH REPORT

| International application No. |
|---|
| **PCT/KR2021/002991** |

**A. CLASSIFICATION OF SUBJECT MATTER**

**G06Q 10/04**(2012.01)i; **G21C 23/00**(2006.01)i

According to International Patent Classification (IPC) or to both national classification and IPC

**B. FIELDS SEARCHED**

Minimum documentation searched (classification system followed by classification symbols)

G06Q 10/04(2012.01); G01T 1/16(2006.01); G01T 1/29(2006.01); G01T 7/00(2006.01); G06F 17/10(2006.01); G06F 30/00(2020.01); G09B 19/00(2006.01); G09B 9/00(2006.01); G21C 17/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방사선 시설(radiation facility), 피폭선량(exposed dose), 시뮬레이션(simulation)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0039042 A (KOREA ATOMIC ENERGY RESEARCH INSTITUTE) 16 April 2020 (2020-04-16)<br>See paragraphs [0019], [0036] and [0049]-[0051]; claim 11; and figures 1-6. | 1-2,5-6 |
| Y | | 3-4,7-8 |
| Y | KR 10-2018-0047575 A (KOREA HYDRO & NUCLEAR POWER CO., LTD.) 10 May 2018 (2018-05-10)<br>See paragraphs [0026]-[0031]; and figures 1-5. | 3-4,7-8 |
| A | JP 2018-009850 A (TOSHIBA CORP.) 18 January 2018 (2018-01-18)<br>See paragraphs [0011]-[0015]; and figure 1. | 1-8 |
| A | KR 10-2016-0001177 A (KOREA ATOMIC ENERGY RESEARCH INSTITUTE) 06 January 2016 (2016-01-06)<br>See paragraphs [0048]-[0062]; and figure 2. | 1-8 |

☑ Further documents are listed in the continuation of Box C.   ☑ See patent family annex.

| | | |
|---|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **07 July 2021** | **08 July 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/002991** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-1536950 B1 (KOREA ATOMIC ENERGY RESEARCH INSTITUTE) 17 July 2015 (2015-07-17) See paragraphs [0054]-[0072]; and figures 2-3. | 1-8 |

Form PCT/ISA/210 (second sheet) (July 2019)

**INTERNATIONAL SEARCH REPORT**
Information on patent family members

International application No.

**PCT/KR2021/002991**

| Patent document cited in search report | | | Publication date (day/month/year) | Patent family member(s) | | | Publication date (day/month/year) |
|---|---|---|---|---|---|---|---|
| KR | 10-2020-0039042 | A | 16 April 2020 | KR | 10-2157702 | B1 | 21 September 2020 |
| KR | 10-2018-0047575 | A | 10 May 2018 | KR | 10-1875120 | B1 | 06 July 2018 |
| JP | 2018-009850 | A | 18 January 2018 | JP | 6692235 | B2 | 13 May 2020 |
| KR | 10-2016-0001177 | A | 06 January 2016 | KR | 10-1644462 | B1 | 03 August 2016 |
| KR | 10-1536950 | B1 | 17 July 2015 | None | | | |

Form PCT/ISA/210 (patent family annex) (July 2019)